**Europäisches Patentamt**

**European Patent Office**

**Office européen des brevets**

(19)

(11) Veröffentlichungsnummer : **0 197 165 B1**

(12) **EUROPÄISCHE PATENTSCHRIFT**

(45) Veröffentlichungstag der Patentschrift :
19.07.89

(51) Int. Cl.⁴ : **H 04 N 7/137**

(21) Anmeldenummer : 85104051.9

(22) Anmeldetag : 03.04.85

(54) Datenreduzierschaltung für digitale Videosignale mit einem Differenz-Pulscodemodulator.

(43) Veröffentlichungstag der Anmeldung :
15.10.86 Patentblatt 86/42

(45) Bekanntmachung des Hinweises auf die Patenterteilung : 19.07.89 Patentblatt 89/29

(84) Benannte Vertragsstaaten :
DE FR GB IT NL

(56) Entgegenhaltungen :
EP-A- 0 104 470
US-A- 4 075 655
ICC'84 LINKS FOR THE FUTURE, IEEE INTERNATIONAL CONFERENCE ON COMMUNICATIONS, 14.-17. Mai 1984, Band 1, Seiten 250-255, Rai Congress Centre, Amsterdam, NL, IEEE, New York, US; S. DREWS et al.: "Circuit technique for VLSI design of a video codec"

(73) Patentinhaber : **Deutsche ITT Industries GmbH
Hans-Bunte-Strasse 19 Postfach 840
D-7800 Freiburg (DE)**

(72) Erfinder : **Mehrgardt, Sönke, Dr.
Häglestrasse 26
D-7801 March (DE)**

## Beschreibung

Die Erfindung betrifft eine Datenreduzierschaltung für die Stellenzahl von digitalen Videosignalen mit einem Differenz-Pulscodemodulator entsprechend dem Oberbegriff des Anspruchs 1. Eine derartige Datenreduzierschaltung ist in einem Aufsatz der Zeitschrift « Elektrisches Nachrichtenwesen », Band 58, 1984, Seiten 447 bis 449 beschrieben. Nach Abschätzungen des Verfassers dieses Aufsatzes erlaubt die vorbeschriebene Anordnung eine Taktfrequenz von etwa 10 MHz und die Realisierung mittels einer einzigen integrierten Schaltung, wenn dafür eine 2-um-CMOS-Technik verwendet wird. Abgesehen von der Tatsache, daß eine CMOS-Herstelltechnik mit 2 um Linienbreite derzeit nur in Forschungs- und Entwicklungslaboratorien zur Verfügung steht und somit für die Massenfertigung von Halbleiterbauelementen noch nicht geeignet ist, ist die bei der vorbeschriebenen Anordnung maximal mögliche Taktfrequenz von etwa 10 MHz dann zu niedrig, wenn derartige Datenreduzierschaltungen in Schaltungen eingesetzt werden sollen, mit denen ein flimmerfreies Fernsehbild ermöglicht werden soll. In diesem Fall sind nämlich höhere Taktfrequenzen, die etwa 17 bis 20 MHz betragen, erforderlich.

Bei der vorbeschriebenen Anordnung sind in der die maximale Taktfrequenz begrenzenden zeitkritischen Schleife ein Subtrahierer, ein Addierer, ein Begrenzer und ein Quantisierer enthalten. Diese Schleife muß innerhalb einer Periode des Taktsignals die erforderlichen Berechnungen vornehmen, was bei entsprechend schnellen Addier-/Subtrahierstufen mittels der vorbeschriebenen Anordnung nur innerhalb etwa 100 ns erfolgen kann.

Die Aufgabe der in den Ansprüchen gekennzeichneten Erfindung besteht daher darin, die zeitkritische schleife so auszugestalten, daß eine der beabsichtigten Arbeitsfrequenz von etwa 17 bis 20 MHz entsprechende kürzere Rechenzeit erreichbar ist. Dabei soll bewußt in Kauf genommen werden, daß sich die Gesamtschaltung gegenüber der vorbeschriebenen Anordnung komplizierter gestaltet und daß sie insgesamt betrachtet mehr Teilschaltungen enthält als die vorbeschriebene Schaltung. Der in der Aufgabenlösung liegende Vorteil einer im Vergleich zur vorbeschriebenen Anordnung etwa doppelt so schnellen Verarbeitungsgeschwindigkeit wird dadurch erreicht, daß die zeitkritische Schleife nur noch aus dem Quantisierer und einem Subtrahierer besteht, der Addierer und der Begrenzer also entfallen sind.

Weitere Vorteile ergeben sich aus der weiteren Erläuterung der Erfindung anhand der Figuren der Zeichnung.

Fig. 1 zeigt in Form eines Blockschaltbilds ein Ausführungsbeispiel der Erfindung, und

Fig. 2 zeigt in Form eines Blockschaltbilds eine Ausgestaltung für eine Teilschaltung nach Fig. 1.

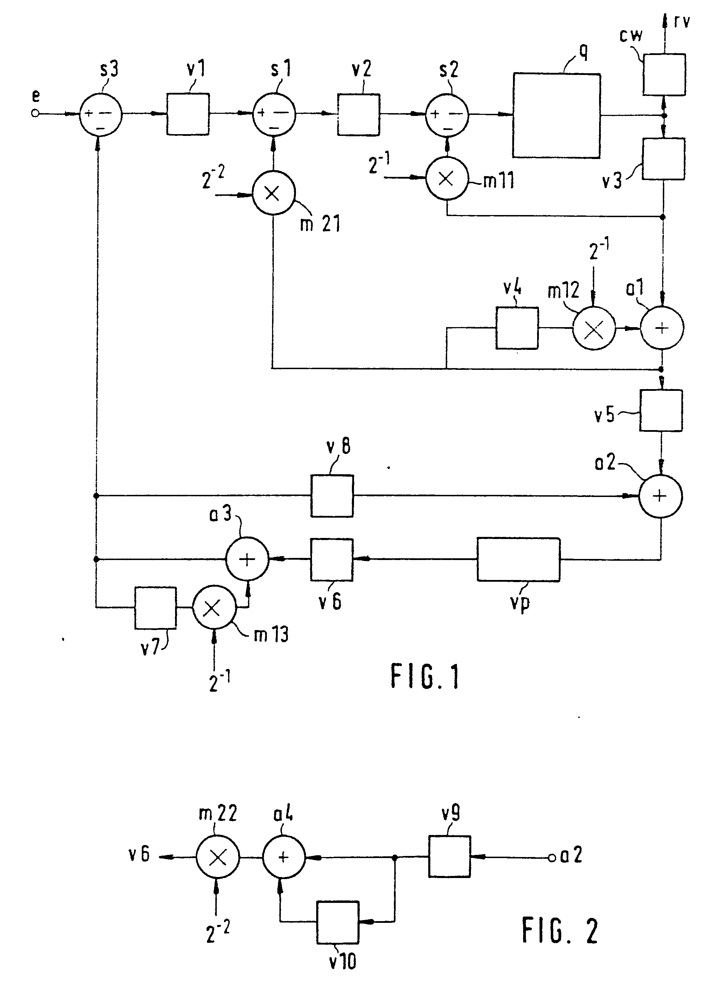

Das in Fig. 1 gezeigte Blockschaltbild eines Ausführungsbeispiels der Erfindung enthält den Eingang e für die Eingangsdaten, also die digitalen Videosignale, deren Stellenzahl z. B. von 8 auf 4 zu reduzieren ist. Die Eingangsdaten sind bei der vorbeschriebenen Anordnung dem ersten Verzögerer v1 zugeführt, dessen Ausgang am Minuend-Eingang des ersten Subtrahierers s1 liegt, von dessen Ausgang sie über den zweiten Verzögerer v2 an den Minuend-Eingang des zweiten Subtrahierers s2 gelangen. Nach einem Merkmal der Erfindung liegen in Fig. 1 die Eingangsdaten, die sich im Takt eines Taktsignals ändern, am Minuend-Eingang des dritten Subtrahierers s3, von dessen Ausgang sie an den Eingang des ersten Verzogerers v1 gelangen.

Der Ausgang des zweiten Subtrahierers s2 liegt am Eingang des Quantisierers q, dessen Aufbau von vorbeschriebener Art sein kann, der also insbesondere ein Festwertspeicher mit Quantisiertabelle für 16 Werte sein kann. Sein Ausgang liegt einerseits über den Codewandler cw am Ausgang für das datenreduzierte Ausgangssignal rv und andererseits direkt am Eingang des dritten Verzögerers v3. In dieser direkten Verbindung von Quantisierer q und Verzögerer v3 liegt der wesentliche Grundgedanke der Erfindung, da dadurch der Addierer und der Begrenzer, die bei der vorbeschriebenen Anordnung in dieser Verbindung liegen, weggelassen werden können und somit in der zeitkritischen Schleife wesentliche Rechenzeit eingespart werden kann. Der Ausgang des dritten Verzögerers v3 ist ferner über den ersten $2^{-1}$-Multiplizierer m11 mit dem Subtrahend-Eingang des zweiten Subtrahierers s2 verbunden.

Der Ausgang des ersten Addierers a1 ist über den ersten $2^{-2}$-Multiplizierer m21 mit dem Subtrahend-Eingang des ersten Subtrahierers s1 verbunden ; ferner liegt er über den vierten Verzögerer v4 und den diesem nachgeschalteten zweiten $2^{-1}$-Multiplizierer m12 an seinem zweiten Eingang und schließlich über den fünften Verzögerer v5 am ersten Eingang des zweiten Addierers a2.

Der Ausgang des zweiten Addierers a2 liegt über den Vertikalprädiktor vp und den diesem nachgeschalteten sechsten Verzögerer v6 am ersten Eingang des dritten Addierers a3, dessen Ausgang über den siebten Verzögerer v7 und den diesem nachgeschalteten dritten $2^{-1}$-Multiplizierer m13 mit seinem zweiten Eingang verbunden ist. Ferner liegt dieser Ausgang direkt am Subtrahend-Eingang des dritten Subtrahierers s3 und über den achten Verzögerer v8 am zweiten Eingang des zweiten Addierers a2.

Die jeweilige Verzögerungszeit des ersten bis siebten Verzögerers v1 ... v7 ist gleich der Periodendauer des Taktsignals, die des achten Verzögerers v8 jedoch viermal so groß.

Nach dem in Fig. 2 gezeigten Ausführungsbeispiel für den Vertikalprädiktor vp nach Fig. 1 besteht dieser in Signalflußrichtung aus dem neunten Verzögerer v9, dessen Verzögerungszeit um 5 Periodendauern des Taktsignals kürzer ist als die Dauer einer Zeile des Fernsehbilds, und ferner aus dem vierten Addierer a4 sowie dem zweiten $2^{-2}$-Multiplizierer m22. Dabei ist der Ausgang des neunten Verzögerers v9 über den zehnten Verzögerer v10, dessen Verzögerungszeit gleich der Periodendauer des Taktsignals ist, mit dem zweiten Eingang des vierten Addierers v4 verbunden.

Obwohl in den Figuren der Zeichnung die signalführenden Leitungen zweischen den einzelnen Teilschaltungen lediglich als einfache Verbindungsleitungen gezeigt sind, symbolisieren diese jedoch Busse, da die einzelnen Teilschaltungen solche zur parallelen Verarbeitung von Datenwörtern sind, was sich aus der eingangs erwähnten Arbeitsgeschwindigkeit der Datenreduzierschaltung nach der Erfindung ergibt. Unter paralleler Signalverarbeitung soll dabei auch eine solche nach dem sogenannten Pipeline-Verfahren verstanden werden, bei dem die einzelnen Stellen eines Digitalworts innerhalb des vom Taktsignal gebildeten Taktsystems um mindestens eine Taktperiode verzögert gegenüber den anderen Stellen verarbeitet werden.

Die Schaltungsanordnung nach der Erfindung eignet sich nicht nur zur Realisierung in der eingangs erwähnten CMOS-Technik, sondern kann auch in N-Kanal-MOS-Technik realisiert werden, wobei deren Linienbreite ebenfalls 2 um beträgt.

## Patentansprüche

1. Datenreduzierschaltung für die Stellenzahl von digitalen Videosignalen mit einem Differenz-Pulscodemodulator, der als Teilschaltungen Verzögerer (v...), Addierer (a...), Subtrahierer (s...), Multiplizierer (m...), einen Horizontal- and einen Vertikal-Prädiktor (vp), die der Prädiktion unter Verwendung von Zweierpotenzen als Gewichtsfaktoren das zu einem betrachteten Datenwort einer Zeile des Fernsehbildes vorausgehenden Datenwort, das diesem entsprechende Datenwort der vorausgehenden Zeile sowie das dem betrachteten Datenwort entsprechende der vorausgehenden Zeile zugrunde legen, sowie einen Quantisierer (q) enthält, dessen Ausgangsdaten von einem Codewandler (cw) in ein Ausgangssignal (rv) mit der reduzierten Stellenzahl umgesetzt sind, wobei

— die Teilschaltungen zur parallelen Datenverarbeitung ausgebildet sind,

— die Eingangsdaten einem ersten Verzögerer (v1), dessen Ausgang am Minuend-Eingang eines ersten Subtrahierers (s1) liegt, zugeführt sind und sich im Takt eines Taktsignals ändern,

— der Ausgang des ersten Subtrahierers (s1) über einen zweiten Verzögerer (v2) am Minuend-Eingang eines zweiten Subtrahierers (s2) liegt, dessen Ausgang mit dem Eingang des Quantisierers (q) verbunden ist,

— der Ausgang des letzteren über einen dritten Verzögerer (v3) mit dem ersten Eingang eines ersten Addierers (a1) gekoppelt ist und über

einen ersten $2^{-1}$-Multiplizierer (m11) am Subtrahend-Eingang des zweiten Subtrahierers (s2) liegt und

— die jeweilige Verzögerungszeit der drei Verzögerer (v1, v2, v3) gleich der Periodendauer des Taktsignals ist, gekennzeichnet durch folgende Merkmale :

— der Ausgang des Quantisierers (q) liegt direkt am Eingang des dritten Verzögerers (v3),

— dem ersten Verzögerer (v1) ist die Minuend-Eingang-Ausgangs-Strecke eines dritten Subtrahierers (s3) vorgeschaltet,

— der Ausgang des ersten Addierers (a1) ist über einen ersten $2^{-2}$-Multiplizierer (m21) mit dem Subtrahend-Eingang des ersten Subtrahierers (s1), ferner über einen vierten Verzögerer (v4) und einen zweiten $2^{-1}$-Multiplizierer (m12) mit dem zweiten Eingang des ersten Addierers (a1) und über einen fünften Verzögerer (v5) mit dem ersten Eingang eines zweiten Addierers (a2) verbunden, dessen Ausgang am Eingang des vertikal-Prädiktors (vp) liegt,

— dessen Ausgang liegt über einen sechsten Verzögerer (v6) am ersten Eingang eines dritten Addierers (a3), dessen Ausgang am Subtrahend-Eingang des dritten Subtrahierers (s3), ferner über einen siebten Verzögerer (v7) und einen dritten $2^{-1}$-Multiplizierer (m13) am zweiten Eingang des dritten Addierers (a3) und über einen achten Verzögerer (v8) am zweiten Eingang des zweiten Addierers (a2) angeschlossen ist, und

— die jeweilige Verzögerungszeit des vierten, fünften, sechsten und siebten Verzögerers (v4 ... v7) ist gleich der des ersten Verzögerers (v1), während die des achten Verzögerers (v8) viermal so groß ist.

2. Datenreduzierschaltung nch Anspruch 1, dadurch gekennzeichnet, daß der Vertikalprädiktor (vp) in Signalflußrichtung aus einem neunten Verzögerer (v9) besteht, dessen Verzögerungszeit um fünf Periodendauern des Taktsignals kürzer ist als die Dauer einer Zeile, und ferner in Signalflußrichtung aus einem vierten Addierer (a4) sowie einem zweiten $2^{-2}$-Multiplizierer (m22) besteht, wobei der Ausgang eines zehnten Verzögerers (v10), dessen Verzögerungszeit gleich der des ersten Verzögerers (v1) ist, mit dem zweiten Eingang des vierten Addierers (v4) und der Ausgang des neunten Verzögerers (v9) mit dem Eingang des zehnten Verzögerers (v10) verbunden ist.

## Claims

1. Data reduction circuit for reducing the number of bits of digital video signals with a differential pulse code modulator containing as subcircuits delay elements (v...), adders (a...), subtracters (s...), multipliers (m...), a horizontal predictor and a vertical predictor (vp) which base the prediction, using powers of two as weighting factors, on the data word preceding a considered data word of a line of the television picture, on the corresponding data word of the preceding line, and on that data word of the preceding line corresponding to the considered data word, and a quantizer (q) whose output data is converted by a code converter (cw) into an output signal (rv) with the reduced number of bits, with

— the subcircuits being designed as parallel-data-processing subcircuits,

— the input data being fed to a first delay element (v1) having its output coupled to the minuend input of a first subtracter (s1), and changing at the rate of a clock signal,

— the output of the first subtracter (s1) being connected via a second delay element (v2) to the minuend input of a second subtracter (s2) having its output coupled to the input of the quantizer (q),

— the output of the latter being coupled through a third delay element (v3) to the first input of a first adder (a1) and through a first $2^{-1}$ multiplier (m11) to the subtrahend input of the second subtracter (s2), and

— the delay produced by each of the three delay elements (v1, v2, v3) being equal to the period of the clock signal, characterized by the following features :

— The output of the quantizer (q) is connected directly to the input of the third delay element (v3) ;

— the first delay element (v1) is preceded by the minuend-input-output path of the third subtracter (s3) ;

— the output of the first adder (a1) is coupled through a first $2^{-2}$ multiplier (m21) to the subtrahend input of the first subtracter (s1), through a fourth delay element (v4) and a second $2^{-1}$ multiplier (m12) to the second input of the first adder (a1), and through a fifth delay element (v5) to the first input of a second adder (a2) having its output connected to the input of the vertical predictor (vp) ;

— the output of the vertical predictor (vp) is coupled through a sixth delay element (v6) to the first input of a third adder (a3) whose output is connected to the subtrahend input of the third subtracter (s3), through a seventh delay element (v7) and a third $2^{-1}$ multiplier (m13) to the second input of the third adder (a3), and through an eighth delay element (v8) to the second input of the second adder (a2), and

— the delay of each of the fourth, fifth, sixth, and seventh delay elements (v4 ... v7) is equal to that of the first delay element (v1), while that of the eighth delay element (v8) is four times that of the first delay element (v1).

2. A data reduction circuit as claimed in claim 1, characterized in that the vertical predictor (vp) consists of a ninth delay element (v9) followed by a fourth adder (a4) and a second $2^{-2}$ multiplier (m22), the delay of the ninth delay element (v9) being five periods of the clock signals shorter than one line period, with the second input of the fourth adder (v4) connected to the output of a tenth delay element (v10) providing a delay equal to that of the first delay element (v1), and the output of the ninth delay element (v9) connected to the input of the tenth delay element (v10).

## Revendications

1. Circuit de réduction de données pour le nombre de chiffres dans des signaux vidéo numériques, comportant un modulateur réalisant une modulation différentielle impulsion-code qui contient, en tant que circuits partiels, des dispositifs de retardement (v...), des additionneurs (a...), des soustracteurs (s...), des multiplicateurs (m...), des dispositifs de prédiction horizontale et verticale (vp), dont la prédiction est basée, dans le cas de l'utilisation de puissances de deux en tant que facteurs de pondération, sur le mot de données, qui précède un mot de données considéré d'une ligne de l'image de télévision, le mot de données, correspondant à ce mot de données antérieure, de la ligne précédente ainsi que le mot de données, qui correspond au mot de données considéré, de la ligne précédente, ainsi qu'un quantificateur (q), dont les données de sortie sont converties par un convertisseur de code (cw) en un signal de sortie (rv) comportant le nombre de chiffres réduits, et dans lequel

— les circuits partiels sont agencés de manière à réaliser le traitement des données en parallèle,

— les données d'entrée sont envoyées à un premier dispositif de retardement (v1), dont la sortie est raccordée à l'entrée du diminuende d'un premier soustracteur (s1), et varie à la cadence d'un signal de cadence,

— la sortie du premier soustracteur (s1) est raccordée par l'intermédiaire d'un second dispositif de retardement (v2) à l'entrée du diminuende d'un second soustracteur (s2), dont la sortie est reliée à l'entrée du quantificateur (q),

— la sortie de ce quantificateur est accouplée par l'intermédiaire d'un troisième dispositif de retardement (v3) à la première entrée d'un premier additionneur (a1) et est raccordée, par l'intermédiaire d'un premier multiplicateur (m11) réalisant une multiplication par $2^{-1}$, à l'entrée de l'élément à soustraire du second soustracteur (s2), et

— le retard respectif produit par les trois dispositifs de retardement (v1, v2, v3) est égal à la durée de la période du signal de cadence, caractérisé par les caractéristiques suivantes :

— la sortie du quantificateur (q) est raccordée directement à l'entrée du troisième dispositif de retardement (v3),

— la section entrée-sortie du diminuende d'un troisième sous-tracteur (s3) est branchée en amont du premier dispositif de retardement (v1),

— la sortie du premier additionneur (a1) est raccordée par l'intermédiaire d'un premier multiplicateur (m21) réalisant une multiplication par $2^{-2}$, à l'entrée du diminuende du premier soustracteur (s1), et en outre par l'intermédiaire d'un quatrième dispositif de retardement (v4) et d'un second multiplicateur (m12) réalisant une multiplication par $2^{-1}$, à la seconde entrée du premier additionneur (a1) et par l'intermédiaire d'un cinquième dispositif de retardement (v5) à la première entrée d'un second additionneur (a2), dont la sortie est raccordée à l'entrée du dispositif de prédiction verticale (vp),

— dont la sortie est reliée par l'intermédiaire d'un sixième dispositif de retardement (v6) à la première entrée d'un troisième additionneur (a3), dont la sortie est raccordée à l'entrée du diminuende du troisième soustracteur (s3) et en outre par l'intermédiaire d'un septième dispositif de retardement (v7) et d'un troisième multiplicateur (m13) réalisant une multiplication par $2^{-1}$ à la seconde entrée du troisième additionneur (a3) et par l'intermédiaire d'un huitième dispositif de retardement (v8) à la seconde entrée du second additionneur (a2), et

— le retard respectif produit par les quatrième, cinquième, sixième et septième dispositifs de retardement (v4 ... v7) est égal au retard produit par le premier dispositif de retardement (v1), tandis que le retard produit par le huitième dispositif de retardement (v8) est quatre fois supérieur.

2. Circuit de réduction de données selon la revendication 1, caractérisé en ce que le dispositif de prédiction verticale (vp) comporte, dans la direction du flux de transmission du signal, un neuvième dispositif de retardement (v9), dont le retard est inférieur de cinq durées de la période du signal de cadence à la durée d'une ligne, et comporte en outre, dans la direction du flux de transmission du signal, un quatrième additionneur (a4) ainsi qu'un second multiplicateur (m22) réalisant une multiplication par $2^{-2}$, la sortie d'un dixième dispositif de retardement (v10), dont le retard est égal à celui du premier dispositif de retardement (v1), étant reliée à la seconde entrée du quatrième additionneur (v4), tandis que la sortie du neuvième dispositif de retardement (v9) est reliée à l'entrée du dixième dispositif de retardement (v10).

FIG. 1

FIG. 2